(19) Europäisches Patentamt / European Patent Office / Office européen des brevets

(11) **EP 2 335 949 A1**

(12) **EUROPEAN PATENT APPLICATION**
published in accordance with Art. 153(4) EPC

(43) Date of publication:
**22.06.2011 Bulletin 2011/25**

(51) Int Cl.:
**B60C 19/00** *(2006.01)*     **B60C 11/03** *(2006.01)*

(21) Application number: **09814581.6**

(22) Date of filing: **16.09.2009**

(86) International application number:
**PCT/JP2009/066129**

(87) International publication number:
**WO 2010/032736 (25.03.2010 Gazette 2010/12)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **18.09.2008 JP 2008239887**

(71) Applicant: **Bridgestone Corporation**
**Tokyo 104-8340 (JP)**

(72) Inventor: **SAKURABA KAZUKI**
**Tokyo 187-8531 (JP)**

(74) Representative: **Oxley, Robin John George**
**Marks & Clerk LLP**
**90 Long Acre**
**London**
**WC2E 9RA (GB)**

(54) **METHOD OF DESIGNING TIRE AND TIRE**

(57) A method of designing a tire designs a tire including a block row which has a plurality of blocks sectioned by circumferential grooves and lateral grooves, and which is formed along a tire circumferential direction. The method of designing a tire comprises the steps of determining a resonance sound frequency f being a reference frequency of an air column resonance sound produced by the tire, on the basis of a ground contact length of the tire in a case where a standard internal pressure and a standard load are applied to the tire; and the steps of determining the number of pitches of the block row in such a manner that a secondary pitch noise frequency fp2 is shifted from the resonance sound frequency f, the secondary pitch noise frequency fp2 being a secondary component of a reference frequency of pitch noise arising from the block row at a reference speed being a reference traveling speed of a vehicle equipped with the tire.

FIG. 2

**Description**

TECHNICAL FIELD

The present invention relates to a method of designing a tire including a block row which has multiple blocks sectioned by circumferential grooves and lateral grooves, and which is formed along a tire circumferential direction. The invention also relates to the tire.

BACKGROUND ART

Noise occurring when a tire rolls on a road surface, or so-called tire noise, is caused mainly by an air column resonance sound or a pattern vibration sound (pitch noise), the air column resonance sound arising from air columns formed by the road surface and a circumferential groove, such as a main groove, extending in a tire circumferential direction, the pattern vibration sound being attributable to an impact applied when a tread on which lateral grooves are formed comes into contact with the road surface.
For reduction of the air column resonance sound, a method of forming a wide circumferential groove in a center portion of a tread has been heretofore known (Patent Document 1, for example).
In addition, for reduction of the pitch noise, a method of setting irregular circumferential lengths for blocks formed on a tread has been known (Patent Document 2, for example).
Patent Document 1: Japanese Unexamined Patent Application No. H6-143932 (FIGs. 1 and 2)
Patent Document 2: Japanese Unexamined Patent Application No. H8-118917 (FIG. 1)

DISCLOSURE OF THE INVENTION

The conventional methods described above have the following problem. Specifically, the method of forming the wide circumferential groove in the center portion of the tread and the method of setting irregular circumferential lengths for blocks impair the degree of freedom in designing a tread pattern. If a tread pattern particularly designed for reducing the air column resonance sound or the pitch noise is adopted, other performances required for a tire, such as a performance on a wet road surface is sacrificed.
In view of the above, an object of the present invention is to provide a method of designing a tire and to provide the tire, by which tire noise can be effectively reduced while the degree of freedom in designing a tread pattern is secured.
The present invention has been made to advantageously solve the above-described problems. An object thereof the present invention is to provide a method of designing a tire including a block row (block row 40) which has a plurality of blocks (blocks 30) sectioned by circumferential grooves (circumferential grooves 10) and lateral grooves (lateral grooves 20), and which is formed along a tire circumferential direction, the method comprising the steps of: determining a resonance sound frequency f being a reference frequency of an air column resonance sound produced by the tire, on the basis of a ground contact length of the tire in a case where a standard internal pressure and a standard load are applied to the tire; and determining the number of pitches of the block row in such a manner that a secondary pitch noise frequency $fp2$ is shifted from the resonance sound frequency f, the secondary pitch noise frequency $fp2$ being a secondary component of a reference frequency of pitch noise arising from the block row at a reference speed being a reference traveling speed of a vehicle equipped with the tire.
In this respect, the standard internal pressure is an air pressure corresponding to a maximum load capacity described in Year Book 2004 of JATMA (Japan Automobile Tire Manufacturers Association). The standard load is a load corresponding to a maximum load capacity in a case of applying a single tire described in Year Book 2004 of JATMA (Japan Automobile Tire Manufacturers Association). Outside Japan, the standard internal pressure is an air pressure corresponding to a maximum load (maximum load capacity) of a single tire described in the following standards. The standard load is a maximum load (maximum load capacity) of a single tire of an application size described in the following standard. Each of the standards is specified by an industrial standard which is effective in a region where tires are produced or used. For example, in the United States, the standard refers to Year Book of "The Tire and Rim Association Inc," and in Europe, the standard refers to "Standards Manual" of "The European Tire and Rim Technical Organization."
According to the above feature, the number of pitches of the block row is determined in such a manner that the secondary pitch noise frequency $fp2$ is shifted from the resonance sound frequency f. Thus, the secondary pitch noise frequency $fp2$ never overlaps with the resonance sound frequency f, thereby achieving effective reduction of the tire noise (pitch noise and air column resonance sound). The above feature also eliminates the need for forming a wide circumferential groove in a center portion of a tread for the reduction of only the air column resonance sound or the need for setting irregular circumferential lengths for blocks for the reduction of only the pitch noise. For this reason, the degree of freedom in designing a tread pattern can be secured.

According to a second aspect of the present invention, there is provided a method of designing a tire according to claim 1, wherein the block row includes: a center block row formed innermost in a tread width direction; and an outer block row formed on each side of the center block row in a view of a tread surface of the tire, and in the step of determining the number of pitches of the block row, the number of pitches of the blocks forming the outer block row is determined in such a manner that the secondary pitch noise frequency fp2 is shifted from the resonance sound frequency f.

According to a third aspect of the present invention, there is provided a method of designing a tire according to claim 1, wherein in the step of determining the number of pitches of the block row, the number of pitches of the blocks is determined in such a manner that the secondary pitch noise frequency fp2 is lower than the resonance sound frequency f.

According to a fourth aspect of the present invention, there is provided a method of designing a tire according to claim 2, wherein in the step of determining the number of pitches of the block row, the number of pitches of the outer block row is set to be less than the number of pitches of the center block row.

According to a fifth aspect of the present invention, there is provided a method of designing a tire according to claim 1, wherein in the step of determining the number of pitches of the block row, the number of pitches of the blocks is determined in such a manner that a frequency difference between the resonance sound frequency f and the secondary pitch noise frequency fp2 is 10% of the resonance sound frequency f or more.

According to a sixth aspect of the present invention, there is provided a method of designing a tire according to claim 1, wherein in the step of determining the number of pitches of the block row, a prime number is determined as the number of pitches.

According to a seventh aspect of the present invention, there is provided a method of designing a tire according to claim 1, wherein in the step of determining the number of pitches of the block row, the number of pitches of the block row is determined in such a manner that the secondary pitch noise frequency fp2 at a traveling speed of 60 km/h of the vehicle is shifted from the resonance sound frequency f.

According to a eighth aspect of the present invention, there is provided a tire including a block row which has a plurality of blocks sectioned by circumferential grooves and lateral grooves, and which is formed along a tire circumferential direction, wherein a secondary pitch noise frequency fp2 is shifted from a resonance sound frequency f being a reference frequency of an air column resonance sound produced by the tire and being based on a ground contact length of the tire in a case where a standard internal pressure and a standard load are applied to the tire, the secondary pitch noise frequency fp2 being a secondary component of a reference frequency of pitch noise arising from the block row at a traveling speed of 60 km/h of a vehicle, and the block row has the number of pitches which makes the secondary pitch noise frequency fp2 shifted from the resonance sound frequency f.

According to a ninth aspect of the present invention, there is provided a tire according to claim 8, wherein the block row includes: a center block row formed innermost in a tread width direction; and an outer block row formed on each side of the center block row in a view of a tread surface of the tire, and the outer block row has the number of pitches which makes the secondary pitch noise frequency fp2 shifted from the resonance sound frequency f.

According to a tenth aspect of the present invention, there is provided a tire according to claim 8, wherein the block row has the number of pitches which makes the secondary pitch noise frequency fp2 lower than the resonance sound frequency f.

According to a eleventh aspect of the present invention, there is provided a tire according to claim 9, wherein the number of pitches of the outer block row is less than the number of pitches of the center block row.

According to a twelfth aspect of the present invention, there is provided a tire according to claim 8, wherein the block row has the number of pitches with which a frequency difference between the resonance sound frequency f and the secondary pitch noise frequency fp2 is 10% of the resonance sound frequency f or more.

According to a thirteenth aspect of the present invention, there is provided a tire according to claim 8, wherein the block row has the number of pitches which is a prime number.

According to the features of the present invention, it is possible to provide a method of designing a tire and to provide the tire, by which tire noise can be effectively reduced while the degree of freedom in designing a tread pattern is secured.

BRIEF DESCRIPTION OF THE DRAWINGS

[FIG. 1] FIG. 1 is a developed view illustrating a tread pattern of a pneumatic tire 1A according to an embodiment (Example 1).
[FIG. 2] FIG. 2 is a flowchart illustrating a method of designing a tire according to the embodiment.
[FIG. 3] FIG. 3 is a graph illustrating a resonance sound frequency and a pitch noise frequency according to the embodiment.

[FIG. 4] FIG. 4 is a graph illustrating a resonance sound frequency and a pitch noise frequency according to Comparative Example.

[FIG. 5] FIG. 5 is a developed view illustrating a tread pattern of a pneumatic tire 1B according to a modified example (Example 2).

[FIG. 6] FIG. 6 is a developed view illustrating a tread pattern of a pneumatic tire 100 according to Comparative Example.

BEST MODE FOR CARRYING OUT THE INVENTION

Embodiments of a method of designing a tire and the tire (pneumatic tire) according to the present invention will be described next by referring to the drawings. Specifically, the description will be given of (1) Configuration of Pneumatic Tire, (2) Method of Designing Tire, (3) Advantageous Effects, (4) Modified Example, (5) Comparative Assessment, and (6) Other Embodiments.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

(1) Configuration of Pneumatic Tire

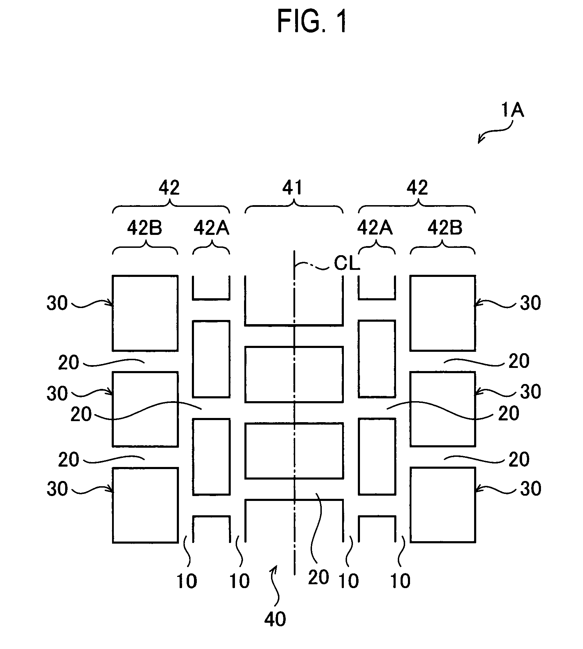

First, a configuration of a pneumatic tire 1A according to an embodiment will be described by referring to a drawing. FIG. 1 is a developed view (view of tread surface) illustrating a tread pattern of the pneumatic tire 1A according to the embodiment. Note that the pneumatic tire 1A according to the embodiment is a general heavy-duty tire including bead portions, a carcass layer, and a belt layer (not illustrated).

As shown in FIG. 1, the pneumatic tire 1A includes a block row 40 having multiple blocks 30 sectioned by circumferential grooves 10 and lateral grooves 20. The block row 40 is formed along a tire circumferential direction.

Specifically, the block row 40 includes a center block row 41, formed innermost in a tread width direction, in a region including a tire equator line CL of the pneumatic tire 1A and outer block rows 42 formed on both sides (i.e., outer sides in tread width direction) of the center block row 41 in a view of a tread surface of the pneumatic tire 1A.

The center block row 41 is not divided in the tread width direction. Note that the center block row 41 may have a sipe (not illustrated) formed therein and extending in the tire circumferential direction, and may be divided in the tread width direction by the sipe.

Each of the outer block rows 42 includes a middle block row 42A and an end block row 42B, the middle block row 42A formed on the outer side of the center block row 41 in the tread width direction, the end block row 42B formed on the outer side of the middle block row 42A in the tread width direction.

The block row 40 (center block row 41, middle block rows 42A, and end block rows 42B) includes the number of pitches which makes a secondary pitch noise frequency fp2 shifted from a resonance sound frequency f. The number of pitches included in the block row 40 is a prime number. The number of pitches of each outer block row 42 (middle block row 42A and end block row 42B) is less than the number of pitches of the center block row 41. How to calculate the number of pitches will be described later in a method of designing a tire.

Here, the number of pitches is the number of blocks 30 provided in the block row 40 across one round of the pneumatic tire 1A. In other words, the pitches denote the intervals of the lateral grooves 20 in the tire circumferential direction.

(2) Method of Designing Tire

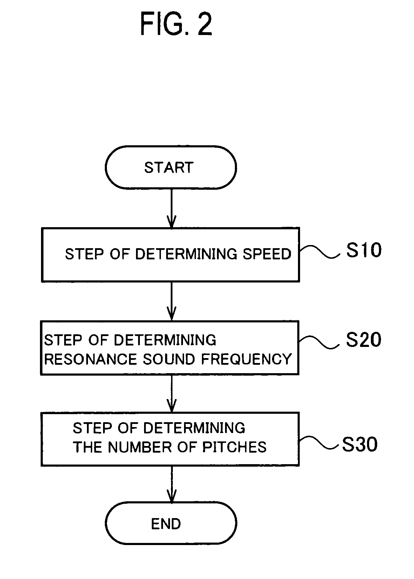

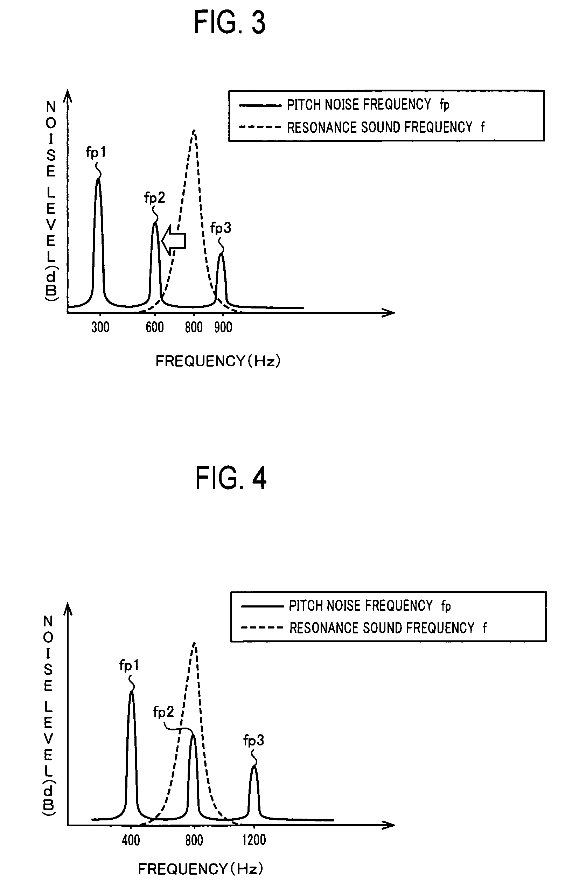

A method of designing a tire according to the embodiment will be described next by referring to the drawings. FIG. 2 is a flowchart illustrating the method of designing a tire according to the embodiment. FIG. 3 is a graph illustrating a resonance sound frequency and a pitch noise frequency according to the embodiment.

As shown in FIG. 2, the method of designing a tire includes a step of determining speed, a step of determining resonance sound frequency, and a step of determining the number of pitches.

(2-1) Step of Determining Speed

In the step of determining speed in Step 10, a reference speed v (km/h) is determined which is a reference traveling speed of a vehicle equipped with the pneumatic tire 1A.

The reference speed v denotes an average speed (i.e., average rolling speed) or the like in a long distance travel in which road noise is likely to become a problem. A speed, such as a legal speed or a speed limit at an expressway is adopted as the reference speed v in some cases. For example, a speed of 60 to 80 km/h can be adopted as the reference speed v of a vehicle equipped with a heavy-duty tire.

(2-2) Step of Determining Resonance Sound Frequency

In the step of determining resonance sound frequency in Step 20, a resonance sound frequency f (Hz) which is a reference frequency of an air column resonance produced by the pneumatic tire 1A is determined on the basis of a ground contact length 1 of the pneumatic tire 1A, the ground contact length 1 obtained in a case where the standard internal pressure and the standard load are applied to the pneumatic tire 1A.
The resonance sound frequency f satisfies the relationship of the following equation where '1' denotes the ground contact length (m) of the pneumatic tire 1A and 'c' denotes the sound speed (m/s).

[Formula 1]

$$f = \frac{c}{2l}$$

Note that the ground contact length 1 of the pneumatic tire 1A denotes the average length of the circumferential grooves 10 of the pneumatic tire 1A, the circumferential grooves 10 coming into contact with the road surface. It is preferable in terms of calculation to adopt as the ground contact length l the average length of circumferential grooves 10 adjacent to the block row 40. However, there are some cases where the average length of all the circumferential grooves 10 is adopted or where the average length of all the ground contact surfaces in the tire circumferential direction is adopted. The sound speed c denotes the speed of sound transmitted through a substance (medium).
The resonance sound frequency f remains almost invariant irrespective of the reference speed v of the pneumatic tire 1A. For example, in a case where the ground contact length 1 of the pneumatic tire 1A is 0.213 m and the sound speed c is 340 m/s, the resonance sound frequency f is 340 / (2 × 0.213) = 800 Hz. As shown in FIG. 3, the resonance sound frequency f is generally in a band around 800 Hz.

(2-3) Step of Determining the Number of Pitches

In the step of determining the number of pitches in Step 30, the number of pitches of the block row 40 is determined in such a manner that a secondary pitch noise frequency fp2 (Hz) is shifted from the resonance sound frequency f (Hz) (see FIG. 3), the secondary pitch noise frequency fp2 being a secondary component of a reference frequency (Hz) of pitch noise arising from the block row 40 at the reference speed v (e.g., at vehicle traveling speed of 60 km/h).
Here, a vehicle traveling speed of 60 km/h is the maximum speed for the vehicle traveling on an ordinary road, and is in a speed range which is used most frequently in practice. For this reason, if the most effect of reducing tire noise is exerted at a vehicle traveling speed of 60 km/h, the tire noise during normal traveling can be reduced preferably.
The reference frequency fp of pitch noise satisfies the relationship in the following equation where 'v' denotes the reference speed (km/h), 'p' denotes the number of pitches (pitches/round), 'r' denotes the radius (m) under heavy duty, and 'n' denotes the order of pitch sound.

[Formula 2]

$$fp = \frac{vp}{3.6 \times 2\pi r} \times n$$

Here, the radius under heavy-duty r denotes an effective radius of the pneumatic tire 1A in terms of an actual travel amount, and is obtained by dividing the wheel travel distance for one round by $2\pi$.
The reference frequency fp of pitch noise varies depending on the reference speed v. The reference frequency fp of pitch noise includes at least a primary pitch noise frequency fp 1 being a primary component, a secondary pitch noise frequency fp2 being a secondary component, and a tertiary pitch noise frequency fp3 being a tertiary component.

In Step 30, the number of pitches of each outer block row 42 (middle block row 42A and end block row 42B) is determined in such a manner that the secondary pitch noise frequency fp2 is shifted from the resonance sound frequency f as shown in FIG. 3. In this determination, the number of pitches of the outer block row 42 is determined in such a manner that the secondary pitch noise frequency fp2 becomes lower than the resonance sound frequency f. Accordingly, the number of pitches of the outer block row 42 becomes less than the number of pitches of the center block row 41.

The number of pitches of the outer block row 42 is determined particularly in such a manner that the frequency difference between the resonance sound frequency f and the secondary pitch noise frequency fp2 is 10% of the resonance sound frequency f or more, preferably 15% of the resonance sound frequency f or more. Note that the number of pitches is preferably a prime number.

(3) Advantageous Effects

An object of the method of designing a tire according to the afore-mentioned embodiment is to design the pneumatic tire 1A which effectively reduces tire noise. The tire noise is noise occurring when the pneumatic tire 1A rolls on the road surface.

Causes of the tire noise include the air column resonance sound and the pattern vibration sound (pitch noise), the air column resonance sound arising from an air column formed by the road surface and the circumferential groove 10, such as a main groove, extending in the tire circumferential direction, the pattern vibration sound being attributable to an impact applied when a tread on which the lateral grooves 20 are formed comes into contact with the road surface.

It is difficult to control the resonance sound frequency f, because the resonance sound frequency f being the reference frequency of air column resonance sound is determined by the ground contact length 1 of the pneumatic tire 1A and the sound speed c. Meanwhile, the pitch noise frequency fp being the reference frequency of pitch noise is determined by the number of pitches of the block row 40.

With these taken into consideration, in the embodiment, the number of pitches of the block row 40 is determined in such a manner that the secondary pitch noise frequency fp2 being the secondary component of the pitch noise frequency fp is shifted from the resonance sound frequency f (see FIG. 3). This enables an effective reduction of tire noise (pitch noise and air column resonance sound) since the secondary pitch noise frequency fp2 does not overlap with the resonance sound frequency f.

In addition, the embodiment eliminates the need for forming a wide circumferential groove 10 in a center portion of a tread for reduction of only the air column resonance sound or the need for setting irregular circumferential lengths for blocks 30 for reduction of only the pitch noise. The embodiment thus enables the securing of the degree of freedom in designing a tread pattern.

For example, consider a case where all the block rows in the block row 40 have the same number of pitches of 63 pitches for 1 round and the reference speed v is 60 to 80 km/h. In this case, as shown in FIG. 4, the primary pitch noise frequency fp1 is in a band around 400 Hz, the secondary pitch noise frequency fp2 is in a band around 800 Hz, and the tertiary pitch noise frequency fp3 is in a band around 1200 Hz.

To sum, if all the block rows in the block rows 40 have the same number of pitches of 63 pitches for 1 round, the secondary pitch noise frequency fp2 overlaps with the resonance sound frequency f as shown in FIG. 4.

On the other hand, consider a case as in the embodiment where the outer block rows 42 have the number of pitches less than the number of pitches of the center block row 41 and the reference speed v is 60 to 80 km/h. In this case, as shown in FIG. 3, the primary pitch noise frequency fp1 is in a band around 300 Hz, the secondary pitch noise frequency fp2 is in a band around 600 Hz, and the tertiary pitch noise frequency fp3 is in a band around 900 Hz.

To sum, if the outer block rows 42 have the number of pitches less than the number of pitches of the center block row 41, the secondary pitch noise frequency fp2 is shifted from the resonance sound frequency f in such a manner as to be lower than the resonance sound frequency f as shown in FIG. 3. This enables effective reduction of the tire noise (pitch noise and air column resonance sound).

In the embodiment, the braking performance (e.g., traction performance) on a wet road surface can be secured without the reduction of the number of pitches of the center block row 41, by determining the number of pitches of each outer block row 42 (middle block row 42A and end block row 42B) in such a manner that the secondary pitch noise frequency fp2 is shifted from the resonance sound frequency f.

The number of pitches of each outer block row 42 is determined particularly in such a manner that the frequency difference between the resonance sound frequency f and the secondary pitch noise frequency fp2 is 10% of the resonance sound frequency f or more, preferably 15% of the resonance sound frequency f or more. This enables more effective reduction of the tire noise while the braking performance on a wet road surface is secured. Note that it is preferable to determine the number of pitches of each outer block row 42 is in such a manner that the frequency difference between the resonance sound frequency f and the secondary pitch noise frequency fp2 does not cause the resonance sound frequency f to overlap with the tertiary pitch noise frequency fp3.

Since the number of pitches is a prime number in the embodiment, the embodiment enables further suppression of a sound level of the tire noise than a case where the number of pitches is not a prime number.

(4) Modified Example

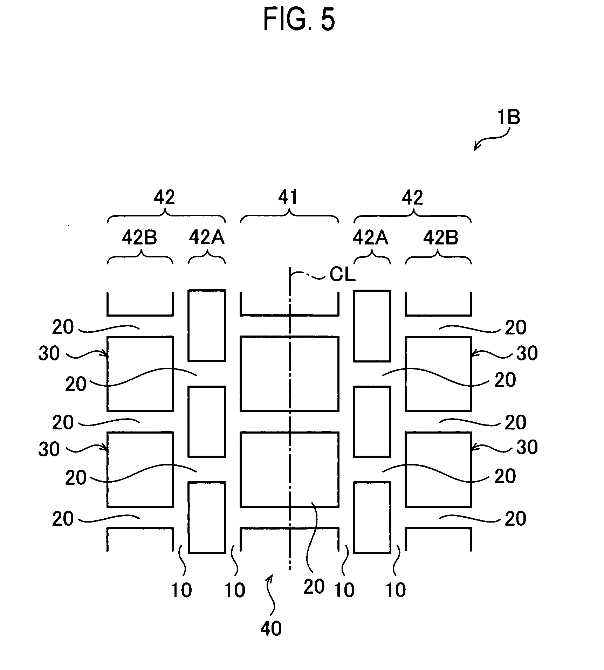

The method of designing a tire and the pneumatic tire 1A according to the afore-mentioned embodiment may be modified as follows. FIG. 5 is a developed view illustrating a tread pattern of a pneumatic tire 1B according to a modified example. Note that the same reference numerals denote the same portions as those in the method of designing a tire and the pneumatic tire 1A according to the afore-mentioned embodiment. Portions different between the embodiment and the modified example will be described mainly.

In the afore-mentioned embodiment, the number of pitches of each outer block row 42 is less than the number of pitches of the center block row 41. In contrast, in the modified example, the number of pitches of the center block row 41 and the number of pitches of each outer block row 42 are determined in such a manner that the secondary pitch noise frequency fp2 is shifted from the resonance frequency f.

Specifically, as shown in FIG. 5, the number of pitches of each outer block row 42 is determined in such a manner that the secondary pitch noise frequency fp2 is shifted from the resonance sound frequency f in the outer block row 42. The number of pitches of the center block row 41 is made equal to the number of pitches of the outer block row 42.

Even in this case, the number of pitches of the center block row 41 and the number of pitches of the outer block row 42 are determined in such a manner that the secondary pitch noise frequency fp2 is shifted to be lower than the resonance sound frequency f. Each block row 40 has the number of pitches with which the frequency difference between the resonance sound frequency f and the secondary pitch noise frequency fp2 is 10% of the resonance sound frequency f or more, preferably 15% of the resonance sound frequency f or more.

In the modified example, the number of pitches of the center block row 41 and the number of pitches of each outer block row 42 are determined in such a manner that the secondary pitch noise frequency fp2 is shifted from the resonance sound frequency f. This involves a sacrifice of the braking performance (e.g., traction performance) on a wet road surface to some degree. The modified example, however, enables more effective reduction of the tire noise (pitch noise and air column resonance sound) while the degree of freedom in designing a tread pattern is secured.

(5) Comparative Assessment

For further clarification of the effects of the present invention, description will be given next of the results of a test conducted by using pneumatic tires according to Comparative Example and Examples 1 and 2 given below. Specifically, the description will be given of (5-1) Configuration of Each Pneumatic Tire and (5-2) Results of Assessment. Note that the present invention is not limited by these examples at all.

(5-1) Configuration of Each Pneumatic Tire

Firstly, by referring to the drawings and Table 1, the configuration of pneumatic tires according to Comparative Example and Examples 1 and 2 will be described briefly.

[Table 1]

| | | Resonance Sound Frequency | Comparative Example | Example 1 | Example 2 |
|---|---|---|---|---|---|
| Number of Pitches (fp) | Center Block Raw | 680 Hz | 63 pitches/1 round (660 Hz) | 63 pitches/1 round (660 Hz) | 53 pitches/1 round (554 Hz) |
| | Middle Block Raw | 680 Hz | 63 pitches/1 round (660 Hz) | 53 pitches/1 round (554 Hz) | 53 pitches/1 round (554 Hz) |
| | End Block Raw | 680 Hz | 63 pitches/1 round (660 Hz) | 53 pitches/1 round (554 Hz) | 53 pitches/1 round (554 Hz) |

Here, the resonance sound frequency f was adjusted in such a manner that all the block rows in the block row 40 have the same resonance sound frequency f, by adjusting a variation in rubber gauge of each pneumatic tire attributable to the ground contact length 1.

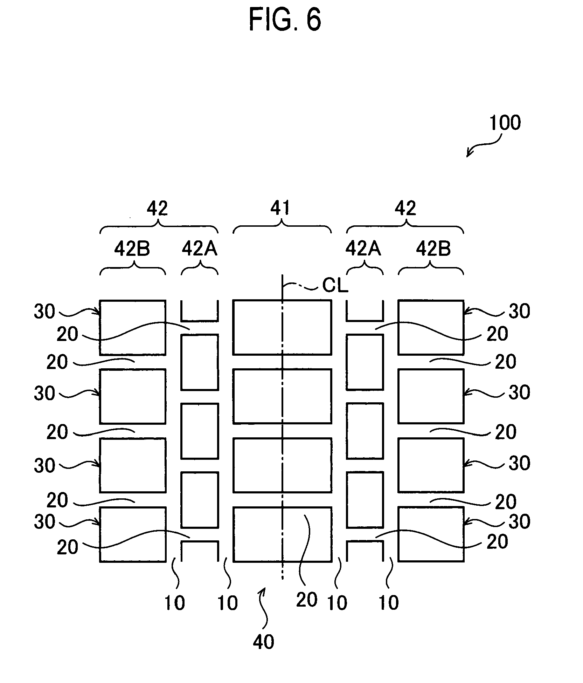

As shown in FIG. 6 and Table 1, in a pneumatic tire 100 according to Comparative Example, the number of pitches of the center block row 41 is 63 pitches for 1 round, the number of pitches of each middle block row 42A is 63 pitches for 1 round, and the number of pitches of each end block row 42B is 63 pitches for 1 round. In the pneumatic tire 100 according to Comparative Example, the secondary pitch noise frequency fp2 overlaps with the resonance sound frequency f.

As shown in Table 1, in the pneumatic tire according to Example 1 (a pneumatic tire having the same pattern as that on the pneumatic tire 1A shown in FIG. 1), the number of pitches of the center block row 41 is 63 pitches for 1 round, the number of pitches of each middle block row 42A is 53 pitches for 1 round, and the number of pitches of each end block row 42B is 53 pitches for 1 round. In the pneumatic tire according to Example 1, the secondary pitch noise frequency fp2 is shifted from the resonance sound frequency f in such a manner as to be lower than the resonance sound frequency f in the middle block row 42A and the end block row 42B.

As shown in Table 1, in the pneumatic tire according to Example 2 (a pneumatic tire having the same pattern as that on the pneumatic tire 1B shown in FIG. 5), the number of pitches of the center block row 41 is 53 pitches for 1 round, the number of pitches of each middle block row 42A is 53 pitches for 1 round, and the number of pitches of each end block row 42B is 53 pitches for 1 round. In the pneumatic tire according to Example 2, the secondary pitch noise frequency fp2 is shifted from the resonance frequency f in such a manner as to be lower than the resonance frequency f in all the block rows in the block row 40.

(5-2) Results of Assessment

The Results of assessment by using the pneumatic tires described above will be described next by referring to Table 2. Specifically, the description will be given of (5-2A) Noise Performance and (5-2B) Traction Performance on Wet Road Surface. Data on each pneumatic tire include the following conditions.

- Tire Size: 11R22.5
- Rim Width: 7.50 inches
- Internal Pressure Condition: 900 kPa

[Table 2]

| | Comparative Example | Example 1 | Example 2 |
|---|---|---|---|
| Noise Performance | 82 | 78 | 76 |
| Traction Performance on Wet Road Surface | 100 | 100 | 85 |

(5-2A) Noise Performance

The noise performance was assessed by applying a load of 2500 kg to each pneumatic tire which was mounted on a test drum, placing the pneumatic tire on a mount used as a road surface, and then rolling the pneumatic tire at a speed of 60 km/h. The indices of the noise performance shown in Table 2 indicate the noise of the pneumatic tires at the peak (630 Hz). Here, a smaller index represents a better noise performance.

As shown in Table 2, it was found that the pneumatic tires according to Examples 1 and 2 were better in the noise performance than the pneumatic tire 100 according to Comparative Example.

(5-2B) Traction Performance on Wet Road Surface

The traction performance on a wet road surface was assessed by causing a vehicle (trailer) equipped with each pneumatic tire to run around a test course on an iron plate used as the wet road surface. For the traction performance on the wet road surface, the time required for the vehicle to travel by a distance of 0 to 15 m was measured while the vehicle was accelerated from an idling state (5 km/h) to a third gear state with the engine speed kept at 2000 rpm. For the indices for the traction performance on the wet road surface shown in Table 2, values obtained by converting acceleration of the pneumatic tires according to Examples 1 and 2 are shown while using, as '100', a value obtained by converting acceleration of the pneumatic tire 100 according to Comparative Example. Here, a greater index represents a better traction performance on the wet road surface.

As shown in Table 2, it was found that the pneumatic tire according to Example 1 was equivalent in the traction performance to the pneumatic tire 100 according to Comparative Example.

(6) Other Embodiments

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, the embodiment of the present invention can be modified as follows. The secondary pitch noise frequency fp2 has been hereinabove described as being shifted from the resonance sound frequency f in such a manner as to be lower than the resonance sound frequency f. The shifting is not limited thereto, but the secondary pitch noise frequency fp2 may be shifted from the resonance sound frequency f in such a manner as to be higher than the resonance sound frequency f. In this case, it is preferable to determine the number of pitches of the blocks 30 in such a manner that the resonance sound frequency f and the primary pitch noise frequency fp1 do not overlap with each other.

The pneumatic tire 1A has been hereinabove described as being a general heavy-duty tire including bead portions, a carcass layer, and a belt layer (not illustrated). The pneumatic tire 1A, however, is not limited thereto and may be a tire for a passenger vehicle or the like. Note that the tire is not limited to a pneumatic tire which can be filled with air. It is a matter of course that the tire may be a tire which can be filled with a fluid other than the air (e.g., nitrogen only), may be a solid tire (airless tire) which needs no fluid therein, or may be tires of other types.

The method of designing a tire has been hereinabove described as including the step of determining speed, the step of determining resonance sound frequency, and the step of determining the number of pitches. The method, however, is not limited thereto, and do not have to include the step of determining speed. It is a matter of course that the reference speed v (km/h) can be selected appropriately for each purpose in this case.

As described above, the present invention naturally includes various embodiments which are not described herein. Accordingly, the technical scope of the present invention should be determined only by the matters to define the invention in the scope of claims regarded as appropriate based on the description.

It is to be noted that the entire contents of Japanese Patent Application No. 2008-239887 (filed on September 18, 2008) are incorporated herein by reference.

Industrial Applicability

As has been described, the method of designing a tire and the tire according to the present invention enable effective reduction of the tire noise while securing the degree of freedom in designing a tread pattern, and therefore are useful in a technique of designing a tire, a technique of producing a tire, and other techniques.

**Claims**

1. A method of designing a tire including a block row which has a plurality of blocks sectioned by circumferential grooves and lateral grooves, and which is formed along a tire circumferential direction, the method comprising the steps of:

    determining a resonance sound frequency f being a reference frequency of an air column resonance sound produced by the tire, on the basis of a ground contact length of the tire in a case where a standard internal pressure and a standard load are applied to the tire; and
    determining the number of pitches of the block row in such a manner that a secondary pitch noise frequency fp2 is shifted from the resonance sound frequency f, the secondary pitch noise frequency fp2 being a secondary component of a reference frequency of pitch noise arising from the block row at a reference speed being a reference traveling speed of a vehicle equipped with the tire.

2. The method of designing a tire according to claim 1, wherein
the block row includes:

a center block row formed innermost in a tread width direction; and
an outer block row formed on each side of the center block row in a view of a tread surface of the tire, and
in the step of determining the number of pitches of the block row, the number of pitches of the blocks forming the outer block row is determined in such a manner that the secondary pitch noise frequency fp2 is shifted from the resonance sound frequency f.

3. The method of designing a tire according to claim 1, wherein in the step of determining the number of pitches of the block row, the number of pitches of the blocks is determined in such a manner that the secondary pitch noise frequency fp2 is lower than the resonance sound frequency f.

4. The method of designing a tire according to claim 2, wherein in the step of determining the number of pitches of the block row, the number of pitches of the outer block row is set to be less than the number of pitches of the center block row.

5. The method of designing a tire according to claim 1, wherein in the step of determining the number of pitches of the block row, the number of pitches of the blocks is determined in such a manner a frequency difference between the resonance sound frequency f and the secondary pitch noise frequency fp2 is 10% of the resonance sound frequency f or more.

6. The method of designing a tire according to claim 1, wherein in the step of determining the number of pitches of the block row, a prime number is determined as the number of pitches.

7. The method of designing a tire according to claim 1, wherein in the step of determining the number of pitches of the block row, the number of pitches of the block row is determined in such a manner that the secondary pitch noise frequency fp2 at a traveling speed of 60 km/h of the vehicle is shifted from the resonance sound frequency f.

8. A tire including a block row which has a plurality of blocks sectioned by circumferential grooves and lateral grooves, and which is formed along a tire circumferential direction, wherein
a secondary pitch noise frequency fp2 is shifted from a resonance sound frequency f being a reference frequency of an air column resonance sound produced by the tire and being based on a ground contact length of the tire in a case where a standard internal pressure and a standard load are applied to the tire, the secondary pitch noise frequency fp2 being a secondary component of a reference frequency of pitch noise arising from the block row at a traveling speed of 60 km/h of a vehicle, and
the block row has the number of pitches which makes the secondary pitch noise frequency fp2 shifted from the resonance sound frequency f.

9. The tire according to claim 8, wherein
the block row includes:

a center block row formed innermost in a tread width direction; and
an outer block row formed on each side of the center block row in a view of a tread surface of the tire, and
the outer block row has the number of pitches which makes the secondary pitch noise frequency fp2 shifted from the resonance sound frequency f.

10. The tire according to claim 8, wherein the block row has the number of pitches which makes the secondary pitch noise frequency fp2 lower than the resonance sound frequency f.

11. The tire according to claim 9, wherein the number of pitches of the outer block row is less than the number of pitches of the center block row.

12. The tire according to claim 8, wherein the block row has the number of pitches with which a frequency difference between the resonance sound frequency f and the secondary pitch noise frequency fp2 is 10% of the resonance sound frequency f or more.

13. The tire according to claim 8, wherein the block row has the number of pitches which is a prime number.

# FIG. 1

# FIG. 2

```
            ┌─────────────┐
            │    START    │
            └──────┬──────┘
                   │
                   ▼
   ┌───────────────────────────────┐
   │  STEP OF DETERMINING SPEED    │ ⌒⌒ S10
   └───────────────┬───────────────┘
                   │
                   ▼
   ┌───────────────────────────────┐
   │ STEP OF DETERMINING           │ ⌒⌒ S20
   │ RESONANCE SOUND FREQUENCY     │
   └───────────────┬───────────────┘
                   │
                   ▼
   ┌───────────────────────────────┐
   │   STEP OF DETERMINING         │ ⌒⌒ S30
   │   THE NUMBER OF PITCHES        │
   └───────────────┬───────────────┘
                   │
                   ▼
            ┌─────────────┐
            │     END     │
            └─────────────┘
```

# FIG. 3

# FIG. 4

# FIG. 5

# FIG. 6

| | INTERNATIONAL SEARCH REPORT | International application No. |
|---|---|---|
| | | PCT/JP2009/066129 |

**A. CLASSIFICATION OF SUBJECT MATTER**
*B60C19/00*(2006.01)i, *B60C11/03*(2006.01)i

According to International Patent Classification (IPC) or to both national classification and IPC

**B. FIELDS SEARCHED**

Minimum documentation searched (classification system followed by classification symbols)
B60C19/00, B60C11/03

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2004-351970 A (Bridgestone Corp.),<br>16 December 2004 (16.12.2004),<br>claims; paragraphs [0005] to [0009], [0014],<br>[0018] to [0032]; fig. 1 to 8<br>(Family: none) | 8-13<br>1-7 |
| X<br>A | JP 7-132709 A (Toyo Tire and Rubber Co., Ltd.),<br>23 May 1995 (23.05.1995),<br>claims; paragraphs [0004] to [0007], [0009] to<br>[0023]; fig. 1 to 6<br>(Family: none) | 8-12<br>1-7,13 |
| X<br>A | JP 2007-083771 A (Bridgestone Corp.),<br>05 April 2007 (05.04.2007),<br>claims; paragraphs [0039] to [0053]; fig. 1 to 2<br>(Family: none) | 8-12<br>1-7,13 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 December, 2009 (03.12.09) | 15 December, 2009 (15.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/066129 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 2002-029220 A  (Bridgestone Corp.),<br>29 January 2002 (29.01.2002),<br>claims; paragraphs [0052] to [0081]; fig. 1, 4<br>(Family: none) | 8-12<br>1-7,13 |
| A | JP 4-110210 A  (The Yokohama Rubber Co., Ltd.),<br>10 April 1992 (10.04.1992),<br>entire text<br>(Family: none) | 1-13 |
| A | JP 63-125411 A  (Sumitomo Rubber Industries, Ltd.),<br>28 May 1988 (28.05.1988),<br>entire text<br>(Family: none) | 1-13 |
| A | JP 2006-232151 A  (The Yokohama Rubber Co., Ltd.),<br>07 September 2006 (07.09.2006),<br>entire text<br>& US 2007/0089821 A1 | 1-13 |

Form PCT/ISA/210 (continuation of second sheet) (April 2007)

**EP 2 335 949 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6143932 B
- JP H8118917 B
- JP 2008239887 A

**Non-patent literature cited in the description**

- Year Book. JATMA, 2004